# EUROPEAN PATENT APPLICATION

(11) **EP 2 444 946 A1**
(43) Date of publication of application: **25.04.2012**
(21) Application number: 10306163.6
(22) Date of filing: 25.10.2010
(51) Int. Cl.: G08B 26/00, G08B 27/00, H04W 88/18, H04W 4/22

(54) **Mobile alert broadcaster**

(71) Applicant: Alcatel Lucent, 75007 Paris (FR)
(72) Inventor: Lausi, Carmine, 84124, SALERNO (IT); Lattuada, Angelo, 20059, VIMERCATE (IT); Falivene, Giuseppe, 83042, ATRIPALDA (AV) (IT)
(74) Representative: Sciaux, Edmond

(57) **Abstract**

A mobile alert terminal (AT1; AT2; AT3) comprises means (UMTSI) for receiving a message from a central alert broadcasting unit (CABU), broadcasted via a public land mobile network, and means (MA) for detecting selection data, in an alert message, and for performing actions requested in the received message only if the alert terminal matches said selection data.

In a preferred embodiment, it further comprises:
- means (GCS) for storing the geographical coordinates of this terminal,
- means (MA) for extracting from a received message area data defining a target area,
- means (MA) for determining whether the location defined by the geographical coordinates of this terminal is included in the target area defined by the extracted area data,
- and means (MA) for performing actions requested in the received message only if the location defined by the geographical coordinates of this terminal is included in the target area defined by the extracted area data.

## Description

### BACKGROUND OF THE INVENTION

### Field of the invention

The present invention generally relates to an alert system. It can be used for providing a warning of imminent danger to the public.

The system is able to complement national, state, provincial, regional, and community emergency broadcast systems that currently do not have the capability of reaching several persons (e.g. not listening to a radio, or not watching television), at the time of an emergency. The system comprises a central alert unit controlled by an administration, and a plurality of alert terminals within communities such as homes, businesses, schools, hospitals, etc, to provide various alert messages and alert actions with loudspeakers, displays, sirens, bells, flashing lights and actuators (if available).

### Description of the prior art

The world community is highly demanding (mainly after tsunami in December 2004) a fast "globally comprehensive early warning system, rooted in existing early warning systems and capacities" (ref. first recommendation of 3rd International Conference on Early Warning, Bonn 2006). This early warning system shall be able to alert in a very short time the affected people in any geographical area (even wide high-density areas). That is a not yet solved technical problem.

The most popular fast communication medium in the world is the phone call (fixed and mobile), so an early warning system able to disseminate Alert Messages via fixed and mobile phone calls would be the most powerful and appropriate one to comply with international demand.

Normally this system should use, per each end user/phone number to be alerted, a telephone channel that should be busy for all the time of the call. This would cause a big limitation, since an alert system with n telephone channels available would be able to inform n end users/phone numbers at most at the same time.

E.g. assuming that:
- the average duration of the call (set up phase + subscriber's answer + conversation/playing of announcement + release) is equal to 1 minute;
- the alert system has 100 telephone channels available;

The alert system could alert 100 end users per minute at most.

On the other hand, the existing alert systems based on other communication media (e.g. radio/TV, SMS, Internet, e-mails, sirens) have other even bigger limitations and/or disadvantages, therefore these solutions are not good enough to comply with international requirements. E.g. during the night a warning dissemination via alert systems able to use only SMS and/or radio/TV is not effective since it cannot reach in time most of the people. Alert Systems based on sirens can wake up the people, but they cannot give enough information and their deployment in very large areas (e.g. like the areas impacted by the tsunami on 26/12/04) would be too expensive.

A possible partial solution of the above mentioned technical problem is the usage of "Alert Terminals", to be installed in big communities (e.g. hospitals, schools, offices, companies,...) and interconnected somehow to a "central server" able to trigger them in case of emergencies. When triggered, the alert terminals are able to inform people belonging to the communities about the received alert.

In this way the dissemination of the alert messages is highly speed up, but the performances of the existing types of "Alert terminals" (in terms of number of end users alerted in a given time) are in any case limited by the number of channels available between the "central server" and the terminals. So only a limited number of alert terminals can be triggered in a short time. Therefore, in some types of emergencies, only a part of the population (i.e. who belongs to "high priority" communities) can be alerted in time. This limitation hinders also the usage of alert terminals in private houses, since they should be handled with a lower priority, i. e. they might receive the alert messages too late.

Thus, there is a need to provide a technical solution for alerting a higher number of people in a shorter time.

### SUMMARY OF THE INVENTION

A first object of the invention is an alert terminal comprising means for receiving a message from a central alert broadcasting unit, broadcasted via a public land mobile network, characterized in that it further comprises means for detecting selection data, in an alert message, and for performing actions requested in the received message only if the alert terminal matches said selection data.

A preferred embodiment further comprises:
- means for storing the geographical coordinates of this terminal,
- means for extracting from a received message area data defining a target area,
- means for determining whether the location defined by the geographical coordinates of this terminal is included in the target area defined by the extracted area data,
- and means for performing actions requested in the received message only if the location defined by the geographical coordinates of this terminal is included in the target area defined by the extracted area data.

For instance, the use of GSM/UMTS broadcasting technology combined with the alert broadcasting terminals according to the invention enables the dissemination of alert messages to a (theoretically) unlimited number of destinations (e.g. all the citizens of a wide high-density target area) in a few seconds.

A second object of the invention is a central alert broadcasting unit comprising means for broadcasting an alert message to a plurality of alert terminals via a public land mobile network, characterized in that said means for broadcasting an alert message comprise means for generating an alert message containing selection data for selecting some terminals among the terminals that will receive the broadcasted alert message and containing the request for some actions.

According to a preferred embodiment, said alert message further contains area data defining a target area.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 represents an alert system comprising one embodiment of the central alert broadcasting unit according to the invention, and several embodiments of the alert terminal according to the invention.
- Figure 2 represents the functional diagram of an embodiment of the alert terminal according to the invention.

### DETAILED DESCRIPTION OF THE PREFERRED EMBODIMENTS

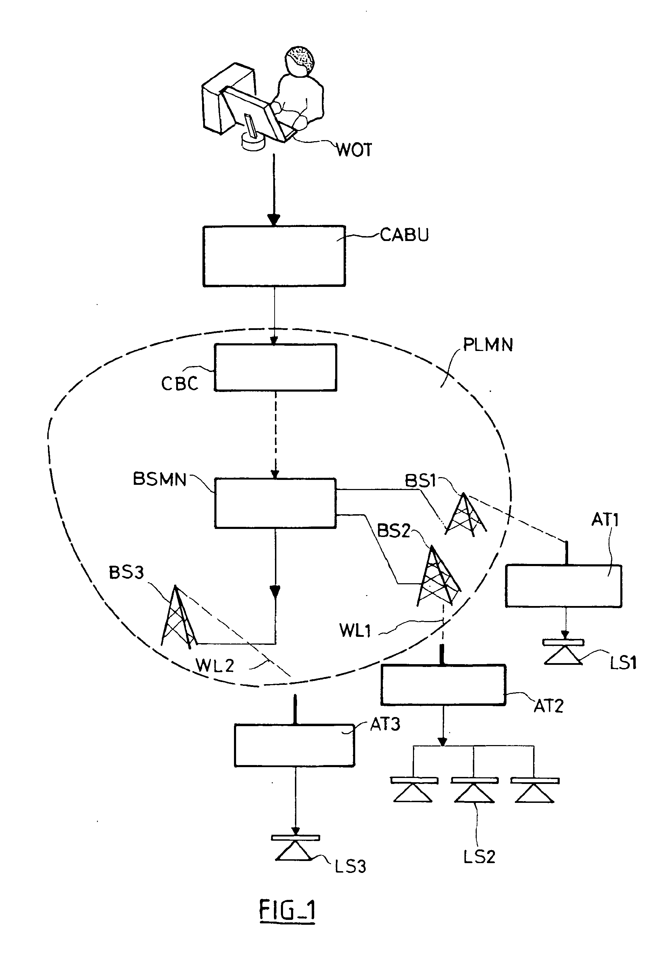

Figure 1 represents an alert broadcasting system comprising one embodiment of the central alert broadcasting unit according to the invention, and several embodiments of the alert terminal according to the invention. This alert broadcasting system comprises:
- A warning organization terminal WOT.
- A central alert broadcasting unit CABU that can be activated by the warning organization terminal WOT.-
- A public land mobile network PLMN that can provide a cell broadcast service, for instance a universal mobile telecommunication service (UMTS) network.
- A plurality of alert terminals, such as the alert terminals AT1, AT2, AT3, that are exemplary embodiments of the alert terminal according to the invention.

All the alert terminals AT1, AT2, AT3 have respectively radio interfaces (e.g. UMTS) that enable them to receive, at any time, a message broadcast via the network PLMN. Each of the alert terminals AT1, AT2, AT3 has a radio link with a base station BS1, BS2, BS3 respectively. Each of the alert terminals AT1, AT2, AT3 is linked to some audio broadcasting equipment, such as a set of loudspeakers, respectively LS1, LS2, LS3, which can alert a community such as a school, a hotel, a business, etc. In such communities, the corridors are often equipped with loudspeakers, linked to appropriate amplifiers, for broadcasting audio messages (for calling a person, for instance). The alert terminals AT1, AT2, AT3 can also pilot sirens, bells, actuators, e.g. to stop gas distribution, to take elevators to the floor, etc.

The central alert broadcasting unit CABU can be linked to any existing public land mobile network that provides a message broadcast service. The text of the present document refers specifically to the so called "Cell Broadcast" service, provided by the GSM and UMTS mobile networks, but the principles of the described method are applicable to other types of message broadcast service provided by public land mobile network as well. The cell broadcast service can send a text message simultaneously to all the mobile handsets (and users) that are in some given network cells. The cell broadcast service is analogous to the Teletex service offered on television, in that like Teletex, it permits a number of unacknowledged general messages to be broadcasted to all alert terminals within a particular broadcast region, that may comprise of one or more network cells, or may comprise the entire public land mobile network. Each broadcast message is assigned to a specific broadcast region, depending on the target area defined by the organization that generates it.

To permit terminals to selectively display only those messages required by the terminal user, broadcast messages are assigned a message class which categorizes the type of information that they contain and the language in which the message has been compiled. Through the use of an appropriate user interface, the user is then able to ignore message types that he does not wish to receive (e.g. advertising information or messages in an unfamiliar language), except the messages that have a special priority assigned according to national / international regulations (e.g. "Presidential Alerts" in USA), that cannot be ignored by the user.

In the example represented on figure 1, the public land mobile network PLMN comprises a cell broadcast centre CBC, at least one base station managing node BSMN, and base stations BS1, BS2, BS3, etc, linked to this managing node BSMN. For instance, in a UMTS network, the base station managing node BSMN is called Radio Network Controller (or RNC) and it carries out radio resource management, some of the mobility management functions; and is the point where encryption is done before user data is sent to and from a mobile.

The warning organization, through the terminal WOT, defines a text message properly formatted in order to be compliant with cell broadcast messages standard. It also defines its target area, via "area data", that are the coordinates (e.g. in WGS84 format) of the vertices of a polygon, or the coordinates of the center of a circle and its radius. The cell broadcasting center CBC of the public land mobile network PLMN, that knows the geographical layout of the cells in the operator's network, identifies all the cells belonging (fully or partially) to the polygon, or circle, defined by the target area data. The area formed by all the identified cells represents the "broadcast region" that consequently is larger or equal to the "target area". The cell broadcasting center CBC sends the broadcast alert message only to the cells belonging to the broadcast region. So only alert terminals that are in the cells identified by the cell broadcasting center CBC (i.e. that belong to the previously defined broadcast region) will receive the alert message.

In the broadcast region all the terminals that are able to receive a broadcast message will receive any broadcast alert message, however only the alert terminals corresponding to selection data contained in the alert message, will be activated. These selection data are:
- An "Originator Identifier Code", in order to identify the specific warning organization that is sending the alert (e.g. Civil Protection).
- A "Terminal Identifier Type", in order to identify the type of alert terminals which the command is directed to, e.g. with/without feedback capabilities.
- An "End User Identifier Type", in order to identify the type of end users which the command is directed to, e.g. authority, public building, private house, etc.

The accuracy of the selection of the terminals by this method depends on the sizes of the network cells (a bigger size causes a bigger difference between the target area and the broadcast region); besides this method cannot select terminals corresponding to an area smaller than a network cell.

An improved method of selection provides a better accuracy: it consists, in an alert terminal, to check whether it is located or not in a given target area, i. e. an "alert terminal with improved accuracy" further comprises means for:
- storing the geographical coordinates of this terminal, in this terminal,
- extracting from a received message "area data" defining a target area,
- determining whether the location defined by the geographical coordinates of this terminal is included in the target area defined by the extracted "area data",
- and performing actions requested in the received message only if the result is positive.

The alert terminals AT1, AT2, AT3 are such "alert terminals with improved accuracy". They are seen by the cell broadcast centre CBC and the base stations BS1, BS2, BS3, as ordinary mobile telephone handsets.

Message transfer on the link between the cell broadcast centre CBC and the base station management node BSMN (Remote Node Controller in UMTS networks) is described in sub-clause 9.1 of the standard 3GPP TS 23.041 V9.4.0 for UMTS networks.

Message transfer on the links between the base station management node BSMN and the base stations BS1, BS2, BS3 is described in the standard 3GPP TS 48.058 v9.0.0.

Message transfer on the radio link between a base station BS1, BS2, BS3 and an alert terminal AT1, AT2, AT3 is described in the standard 3GPP TS 44.012 v9.0.0. The timing of transferred messages is described in the standard 3GPP TS 45.002 v9.4.0.

Each broadcast message comprises of 82 octets, which, using the default character set, equates to 93 characters. Up to 15 of these messages (pages) may be concatenated to form a macro-message. Each page of such macro messages will have the same message identifier (indicating the source of the message), and the same serial number.

The cell broadcast centre CBC broadcasts to the base stations BS1, BS2, BS3, etc, in accordance with the broadcast region. For instance, the broadcast region is equal to the cells covered by the base stations BS1, BS2, BS3.

The messages are broadcasted cyclically by the base stations at a frequency and for a duration agreed with the central alert broadcasting unit CABU. Using the message identifier and the serial number contained in the received broadcast messages, each terminal AT1, AT2, AT3, etc, is able to identify and ignore already received messages.

All terminals within the coverage area of the transmitting base stations BS1, BS2, BS3 will be able to receive the broadcast alert messages, provided that they are switched on and in the idle state.

Messages may be broadcasted on two different cell broadcast channels, which are characterized by different quality of service. An alert terminal AT1, AT2, AT3, etc, is always able to read the basic channel at least. The reading of the extended channel may collide with other tasks of a terminal. Therefore the probability of receiving a broadcast message on the extended channel is smaller than on the basic channel. The reading of the extended channel for terminals is optional. The scheduling on the channels will be done independently.

When the warning organization has to disseminate an alert message to a given target area, it accesses to the central alert broadcasting unit CABU, via the warning organization terminal WOT, by a classical access control procedure preventing malicious alerts. The warning organization supplies its identifier to the central alert broadcasting unit CABU. It designates a target area. It indicates the type of alert message to be broadcast, and supplies an alert message to broadcast in the target area.

Then the central alert broadcasting unit CABU, via the "Cell Broadcast service" provided by PLMN, broadcasts this alert message to the base stations that cover the network cells constituting the broadcast region. If at least some alert terminals are the variant with improved accuracy, the alert message contains location data that define the target area, so that the alert message will activate only the terminals that are in the target area.

The warning organization supplies to the alert broadcasting unit CABU, via the terminal WOT:
- An "Originator Identifier Code", in order to identify the specific warning organization that is sending the alert (e.g. Civil Protection).
- A "Terminal Identifier Type", in order to identify the type of alert terminals which the command is directed to, e.g. with/without feedback capabilities.
- An "End User Identifier Type", in order to identify the type of end users which the command is directed to, e.g. authority, public building, private house, etc.
- A "Command Type".
- A "Command Number".
- An "Alert Type" including a code (and a "subcode" for advanced types of terminals if any).
- "Area data" defining the target area.

Practically, an operator of the warning organization has to follow the simple and fast following procedure:
a) The operator writes, in a graphic user interface (on the terminal WOT), the name of a region, a mountain, or a town, near the target area. Software means then display, on the terminal WOT, a map including this region, mountain, or town.
b) Using a mouse and a "zoom" button, the operator can focus on the target area.
c) If the target area can be delimited by a polygon, the operator clicks on a button activating the function called "polygon". Then the operator clicks on the vertices of the polygon (for defining the target area). The geographical coordinates of the vertices are determined. The polygon is displayed on the screen.
d) Or if the target area can be delimited by a circle, the operator clicks on a button activating the function called "circle". Then the operator clicks on the centre of the circle, and on a point of the circumference (delimiting the target area). The geographical coordinates of the centre, and the radius, are determined. The circle is displayed on the screen.

Afterwards the warning organization operator inputs all the other data to be supplied to the central alert broadcasting unit CABU (see above).

Then the central alert broadcasting unit CABU broadcasts a single alert message to all the alert terminals that are in the broadcast area. The alert message contains area data designating the target area selected by the warning organization. Each alert terminal with improved accuracy comprises means for determining whether it is located inside or outside the target area, by comparing its location with the target area as defined by the area data contained in the received alert message (this method provides the possibility to precisely define target areas that are finer than the network cells).

The alert message text is a command that is coded according to the general format described below:
1) An authentication part, in order to check that the command arrives from an authorized user. It includes an "Originator Identifier Code", in order to identify the specific warning organization that is sending the alert (e.g. Civil Protection).
2) A "Terminal Identifier Type", in order to identify the type of alert terminals which the command is directed to, e.g. with/without feedback capabilities.
3) An "End User Identifier Type", in order to identify the type of end users which the command is directed to, e.g. authority, public building, private house, etc.
4) "Area data", i.e.:
   a) coordinates (e.g. in WGS84 format) of vertices of a polygon that delimitates the geographical target area where the message has to be disseminated,
   b) or coordinates of the center and value of the radius of a circle that delimitates the target area.
5) A "Command Type" indicating: dissemination of a message, configuration update, test, etc.
6) A "Command Number".
7) An "Alert Type" including a code (and a "subcode" for advanced types of terminals if any).
8) A "Message Text" containing the text of a message to be disseminated via "text to speech" and/or to be displayed on screens (when available in the alert terminal or in end user's environment).
9) A "Message Number" in order to identify a pre-recorded announcement stored in the terminal and to be played.
10) "Additional information" (if any).

The parts of a same command are separated by a delimiter (e.g. the character '*'). Some of the above parameters can be missing (e.g. "Message Text"): in this case the relevant part of the command is empty and there are 2 consecutive delimiters (e.g. '**'). The complete command is delimited by another delimiter (e.g. the character '#') at the beginning and at the end of the command.

So a complete command can have the following format:
#<Originator Identifier Code>*<Terminal Identifier Type>*<End User Identifier Type>*< Area Data>*<Command Type>*<Command Number>*<Alert Type>* < Message Text>*<Message Number>*<Additional information>#

The mandatory parameters are:
- "Originator Identifier Code"
- "Command Type"
- "Command Number"

The other parameters can be missing. In this case, they assume the following default values:
1) "Terminal Identifier Type" = All (all the types of alert terminals)
2) "End User Identifier Type" = All (all the types of end users)
3) "Area Data" = All (all the terminals, independently from their geographical position)
4) "Alert Type" = None (When the alert type is not relevant for command execution).
5) "Message Text" = None
6) "Message Number" = None
7) "Additional information" = None

The alert terminals AT1, AT2, AT3... need to be configured at installation phase with the terminal identifier type and end user identifier type corresponding to the type of alert terminal and end user type.

Besides the terminals with improved accuracy need to be configured also with the "Geographical Coordinates" of the respective places where they are installed. The need to configure the "Geographical Coordinates" too is a disadvantage of this variant of alert terminal against the "basic variant": in fact only the latter could be realized also in a "portable hardware configuration", that could be transported without any need of reconfiguration (e.g. by a user during a travel).

This configuration may be done by:
- the authority providing the terminal (e.g. the town council),
- or an employee of the shop that is selling the terminal,
- or a technician that installs the terminal at end user premises,
- or by the end user itself.

Each terminal shall be equipped with a key enabling a self-test of the equipment. This self-test that can be triggered by the end user, to check correct behavior.

A terminal shall be able to perform the actions described below (if the relevant parameter is present in the received command):
1) To perform the authentication of the received command and to apply the behavior relative to the specific warning organization (identified by the "Originator Identifier Code").
2) To check that its own "Terminal Identifier Type" and "End User Identifier Type" correspond to the ones contained in the command.
3) Only terminals with improved accuracy: to check that its own "Geographical Coordinates" belong to the polygon or circle defined by the "Area Data" contained in the command.
4) If all the previous checks are positive, to apply the actions corresponding to the "Command Type":
   A) If the "Command Type" is "message dissemination", applying the action(s) corresponding to the specific "Alert Type" e.g.:
      - to pilot actuators and/or bells according to preconfigured data associated to each "Alert Type",
      - to derive, from the "Message Text", an audio announcement via text-to-speech and to broadcast it via the audio broadcasting equipment,
      - to display the "Message Text" on the screens / panels (if available),
      - to open the speech path towards the audio broadcasting equipment, if the "Message Number" indicates that a pre-recorded announcement has to be played.
   B) If the "Command Type" is "update configuration": to update the data associated to the specific "Command Number" in its own data base.
   C) If the "Command Type" is "test": to apply the test actions associated to the specific "Command Number" (e.g. to play a test announcement).

The alert terminals can be implemented with different "capability levels", i.e. a simplified and cheaper version might be unable to perform some of the above actions. In particular the announcement will be played according to the "capability level" of the terminal, on the ground of the following priorities:
a) if the alert terminal has text-to-speech capability and if a text is present, only text-to-speech announcement will be applied, otherwise
b) if the alert terminal is able to play a pre-recorded announcement and the "Message Number" is present, only the pre-recorded announcement associated to the "Message Number" will be applied, otherwise
c) no announcement will be played.

So with a number "N" of distributed alert terminals inside communities, a centralized alert broadcasting system will be able to disseminate simultaneously messages to N communities. Inside the communities the message will be broadcasted via "Audio Broadcasting Equipments" (e.g. loudspeakers, sound/amplifier systems) available in the community building / area. In this way the system provides a huge increase of the number of alerted people in a given time.

The time required for message broadcasting is not significantly dependent from the number of terminals, so the latter can be installed in all the type of "communities" (big and small), even in all the private houses. So the technical solution of the present invention overcomes the limitations of the existing types of alert terminals, mentioned at the end of the section "Description of the prior art".

An alert terminal may be able to pilot:
- bells and/or sirens, for the customers that have no loudspeakers/sound/amplifier systems available: in this case the number and duration of ringing will differentiate an emergency from the others (analogously to the method used by the ships).
- "actuators", locally available, e.g. to stop gas distribution, to take elevators to the ground floor, etc.

The alert terminals might be commercialized in 2 basic configurations.
1) A small and cheap configuration for "Consumers" / small communities (e.g. private houses, private buildings, joint ownerships ...) with standard predefined announcements, and standard piloting of bells and sirens.

A bigger configuration for "Enterprises"/big communities (e.g. factories, companies, schools, hospitals, public offices ...) with the possibility to customize the predefined announcement (e.g. in order to provide more detailed instructions for evacuation, taking in account the physical layout of the customer site) and the number and duration of ringing of bells and sirens. Besides this configuration should allow the customer (via an authentication procedure) to activate autonomously the terminal, selecting a predefined announcement or recording a real time announcement: in this way the customer could use the terminal also for local emergencies (e.g. fire, emission of dangerous gases ...) and for the broadcasting of other types of announcements (e.g. information to employees and/or clients, advertisements...).

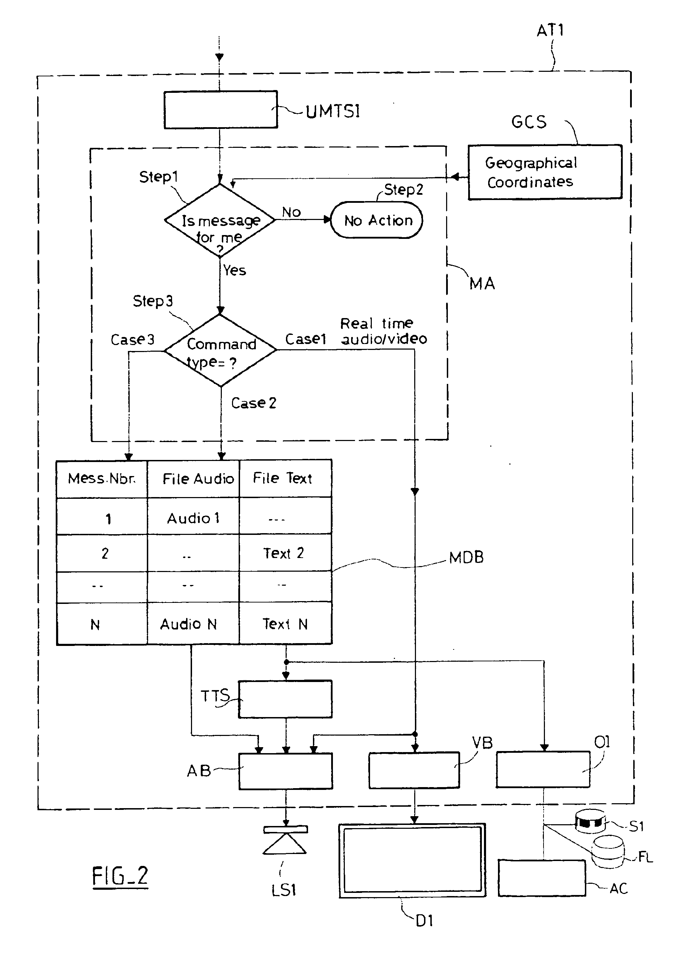

**Figure 2** represents the functional diagram of an embodiment AT1 of the alert terminal according to the invention. It comprises:
- An UMTS interface UMTSI for receiving messages, comprising a SIM card (Subscriber Identifier Module) corresponding to a mobile operator supporting a cell broadcasting service,
- a message analyzer MA,
- a storage GCS for storing the geographical coordinates of the terminal (since this embodiment is the variant with improved accuracy),
- a message data base MDB,
- a video board VB that may be connected to a large display D1,
- an audio board AB that may be connected to audio broadcasting equipment LS1,
- a text to speech converter TTS,
- an output interface Ol that may be connected to a flashing light FL (as well as sirens SI, actuators AC, etc.).

Since this embodiment is the variant with improved accuracy, the message analyzer MA comprises software means for:
- extracting from a received alert message area data defining a target area,
- determining whether the location defined by the geographical coordinates of this terminal (supplied by the storage GCS) is included in the target area defined by the extracted area data,
- then implementing the actions requested in the received alert message only if the result is positive.

The message analyzer MA comprises software means for comparing the geographical coordinates of this terminal with the coordinates of points included in a polygon defined by the coordinates of its vertices.

The message analyzer MA also comprises software means for comparing the geographical coordinates of this terminal with the coordinates of points included in a circle defined by the coordinates of its centre, and its radius.

The message analyzer MA parses the received text message and it decides whether or not to execute one or more actions according to a predetermined logic. For example:
Step 1: Determining whether or not the message is for the terminal AT1 by checking: "Originator Identifier Code", "Terminal Identifier Type", "End User Identifier Type", "Polygon Coordinates" or "Center-Radius" (the last one only for the terminals with improved accuracy).
**Step 2:** If the message is for the terminal AT1, determining the action(s) to be executed in the following way:
   **Case 1** - If the "Command Type" is "message dissemination", applying the action(s) corresponding to the specific "Command Type", "Command Number", and "Alert Type" e.g.:
      - to pilot actuators/sirens/bells S1 according to preconfigured data associated to each "Alert Type",
      - to derive, from a received "Message Text", an audio announcement via the text-to-speech converter TTS, and to broadcast it via the audio board AB and the audio broadcasting equipment LS1; and to display the "Message Text" via the video board VB and the display D1 (if available).
**Case 2** - If "Command Type" = "Preconfigured Message Dissemination", the "Message Number" carried in the received alert message is used to access the Message Data Base MDB, in order to get both the audio file to be played and the text to be displayed. In case the text file does not exist, no text will be displayed (only audio file will be played). In case the audio file does not exist, the text file will be sent to the text to speech converter TTS, in order to be converted into an audio file to be played via the sound board AB1 and the audio broadcasting equipment LS1.
**Case 3** - If "Command Type" = "Configuration Message", the "Message Text" carried in the received alert message is used to replace the "File Text" stored in the message data base MDB at the entry "Message Number". In case the "Message ID" does not exist in the data base MDB, a new entry is created.

The cell broadcast service is an unconfirmed push service, meaning that the originator of the message will not know who has received the message, except if the terminal is adapted to elaborate and send a feedback message. Variants of the alert terminal and of the central alert broadcasting unit according to the invention comprise additional software means in order to provide the "end users" (i. e. communities and individuals owning such an alert terminal) with the possibility to send a notification and some data to the central alert broadcasting unit CABU.

In fact the alert message is a text message that may contain a request for notification/confirmation of the reception of the alert message and request for some data (e.g. damages on the end user's building caused by a calamity, number of wounded people, etc.). According to this variant, the terminal comprises means enabling the end user to input the requested data, e. g. a keyboard. The terminal sends the notification/confirmation and the requested data, if any, via a Short Message System (SMS), the text being formatted by the terminal according to a predefined structure defined by data stored in its memory.

In order to avoid the overload of the central alert unit and/or of the network, due to a high number of SMS response messages in a short time, two alternative methods may be used:
A) The terminal sends the SMS response message after a time corresponding to a "RAND number" calculated by the terminal in the range between 0 and a "maximum RAND number" sent by the central alert broadcasting unit.
B) The central alert broadcasting unit interrogates successively each terminal, e.g. by sending an SMS message.

According to this variant A, the alert message sent by the central alert broadcasting unit CABU contains two additional fields:
a) "Address for notifications" (i.e. the mobile station international subscriber directory number - MSISDN) of the central alert broadcasting unit CABU).
b) "Maximum RAND number" (i.e. the maximum value that can be reached by a random number to be calculated by the terminal).
So, after the reception of the message, the end user shall have the possibility to push a button on the alert terminal, and to input the data requested in the alert message (e.g. via a keyboard or a "touch screen"). The alert terminal shall calculate with a RAND routine a "RAND number" in the range between 0 and the "Maximum RAND number", and shall actually send the SMS with the data (input by the end user) to the central alert broadcasting unit CABU after a number of seconds equal to the "RAND number", using as destination address the number received in the field "Address for notifications". This random delay prevents a congestion of the central alert broadcasting unit CABU by receiving too many simultaneous notification messages.

There are possible variants for the response message, besides the SMS:
1) via Unstructured Supplementary Services Data (USSD), but the implementtation is more complex than SMS.
2) via e-mail, but an Internet access is required.
3) Via voice call, but text-to-speech/speech recognition should be used, that is more complex and less reliable than SMS.

The central alert broadcasting unit CABU can be distributed and physically dimensioned according to the number of deployed alert terminals, and the time requested for data collection, therefore the "Address for notifications" can be different depending on the geographic locations of the alert terminals. The central alert broadcasting unit CABU shall have the capability to receive SMS response messages and to analyse the contained data. It shall include the received data into its data base. After the reception of all the data, the central alert broadcasting unit CABU shall issue a report according to administration's requirements (e.g. calculating the totals, displaying the results with different colors, etc.).

According to the variant B, the central alert broadcasting unit comprises additional software means in order to interrogate successively each terminal, by sending a series of SMS messages. When the user receives an alert message requesting a response message, he/she inputs the data requested in the alert message. The alert terminal stores them in its memory. After some time, the central alert broadcasting unit CABU shall interrogate this alert terminal, asking to send the stored data (if any). According to this variant, the alert terminal needs to be registered in central alert broadcasting unit CABU database at the installation time, storing the MSISDN of each terminal, to be used by the central alert broadcasting unit CABU to send the SMS for interrogation.

The alert terminal shall have also the possibility to send automatically (without user intervention) some data, such as the results of actions performed by the terminal itself.

The capability to collect data from the alert terminals gives to the Warning Organization the possibility to ask and collect data in a very short time from an even huge number of people. E.g. in case of calamities, the Civil Protection can quickly have a report on the damages caused by calamities and identify the areas to be addressed by rescue teams with higher priority, and even to properly dimension these teams.

This capability can be very useful for many other applications too, even commercial E.g. this feature will enable and ease applications such as polls, televoting, order collections, etc.

## Claims

1. An alert terminal (AT1; AT2; AT3) comprising means (UMTSI) for receiving a message from a central alert broadcasting unit (CABU), broadcasted via a public land mobile network, **characterized in that** it further comprises means (MA) for detecting selection data, in an alert message, and for performing actions requested in the received message only if the alert terminal matches said selection data.

2. An alert terminal (AT1; AT2; AT3) according to claim 1, **characterized in that** it further comprises:
- means (GCS) for storing the geographical coordinates of this terminal,
- means (MA) for extracting from a received message area data defining a target area,
- means (MA) for determining whether the location defined by the geographical coordinates of this terminal is included in the target area defined by the extracted area data,
- and means (MA) for performing actions requested in the received message only if the location defined by the geographical coordinates of this terminal is included in the target area defined by the extracted area data.

3. An alert terminal (AT1; AT2; AT3) according to claim 2, **characterized in that** said means (MA) for determining whether the location defined by the geographical coordinates of this terminal is included in the target area defined by the extracted area data, comprise means for comparing the geographical coordinates of this terminal with the coordinates of the vertices of a polygon delimiting the target area.

4. An alert terminal (AT1; AT2; AT3) according to claim 2, **characterized in that** said means (MA) for determining whether the location defined by the geographical coordinates of this terminal is included in the target area defined by the extracted area data, comprise means for comparing the geographical coordinates of this terminal with the coordinates of points included in a circle defined by the coordinates of its centre, and by its radius.

5. An alert terminal (AT1; AT2; AT3) according to claim 1, **characterized in that** said selection data are:
- an identifier to identify the specific warning organization that is sending the alert,
- and an identifier to identify the type of alert terminals which the message is directed to,
- and an identifier to identify the type of end users which the command is directed to.

6. An alert terminal (AT1; AT2; AT3) according to claim 1, **characterized in that** it further comprises:
- means for receiving a request for notification/confirmation of the reception of an alert message and for transmission of some data, to a central alert broadcasting unit (CABU);
- means for giving to the end user the possibility to provide the requested data and for storing these data in the alert terminal;
- and means for sending, to a central alert broadcasting unit (CABU), a message containing a notification/confirmation of the reception of an alert message, and containing the requested data.

7. An alert terminal (AT1; AT2; AT3) according to claim 6, **characterized in that**:
- said means for receiving a request for notification/confirmation of the reception of an alert message and for transmission of some data, comprise means for extracting from an alert message: a request for notification/confirmation of the reception of this alert message and for transmission of some data, a destination mobile station international subscriber directory number, and the maximum value that can be reached by a random number to be calculated by the terminal;
- and said means for sending, to a central alert broadcasting unit (CABU), a message containing a notification/confirmation of the reception of an alert message, and containing the requested data, comprise means for calculating a random number in the range between 0 and the maximum value contained in the alert message, sending the message to the received mobile station international subscriber directory number, and after a delay corresponding to the calculated random number.

8. An alert terminal (AT1; AT2; AT3) according to claim 6, **characterized in that**:
- said means for receiving a request for notification/confirmation of the reception of an alert message and for transmission of some data, comprise means for extracting, from an alert message, a request for notification/confirmation of the reception of this alert message and for storing of some data;
- said means for receiving a request for notification/confirmation of the reception of an alert message and for transmission of some data, are adapted for receiving a second request and for extracting, from this second request, a destination mobile station international subscriber directory number;
- and said means for sending, to the central alert broadcasting unit (CABU), a message containing a notification/confirmation of the reception of an alert message, and containing the requested data, comprise means for sending this message to the received mobile station international subscriber directory number only after the reception of the said second request.

9. A central alert broadcasting unit (CABU) comprising means for broadcasting an alert message to a plurality of alert terminals (AT1; AT2; AT3) via a public land mobile network (PLMN), **characterized in that** said means for broadcasting an alert message comprise means for generating an alert message containing selection data for selecting some terminals among the terminal that will receive the broadcasted alert message.

10. A central alert broadcasting unit (CABU) according to claim 9, **characterized in that** said message further contains area data defining a target area.

11. A central alert broadcasting unit (CABU) according to claim 10, **characterized in that** said area data defining a target area are the coordinates of the vertices of a polygon.

12. A central alert broadcasting unit (CABU) according to claim 10, **characterized in that** said area data defining a target area are the coordinates of the centre of a circle, and its radius.

13. A central alert broadcasting unit (CABU) according to claim 9, **characterized in that** said selection data are:
- an identifier to identify the specific warning organization that is sending the alert,
- and an identifier to identify the type of alert terminals which the message is directed to,
- and an identifier to identify the type of end users which the command is directed to.

14. A central alert broadcasting unit (CABU) according to claim 9, **characterized in that** said alert message contains: a request for a response message, a destination mobile station international subscriber directory number for this response message, and the maximum value that can be reached by a random number, to be calculated by the terminal, defining a delay to send the response message.

15. A central alert broadcasting unit (CABU) according to claim 9, **characterized in that** it further comprises means for gradually interrogating a plurality of alert terminals so that they respectively send, to this central alert broadcasting unit (CABU) response messages containing data provided by these alert terminals.

16. Terminal (WOT) for controlling a central alert broadcasting unit (CABU) according to claim 11, **characterized in that** it comprises means for supplying, to this unit, data defining a target area by the coordinates of the vertices of a polygon.

17. Terminal (WOT) for controlling a central alert broadcasting unit (CABU) according to claim 12, **characterized in that** it comprises means for supplying, to this unit, data defining a target area by the coordinates of the centre of a circle, and its radius.

18. Terminal (WOT) for controlling a central alert broadcasting unit (CABU) according to claim 14, **characterized in that** it comprises means for supplying, to this unit, a request for notification/confirmation of the reception of an alert message and for transmission of some data to be collected from alert terminals.

19. An alert system **characterized in that** it comprises a central alert broadcasting unit (CABU) according to one of the claims 9-15; at least one alert terminal (AT1; AT2; AT3) according to one of the claims 1-8 and at least one Terminal (WOT) according to one of the claims 16-18.
